**Europäisches Patentamt**

(19) **European Patent Office**

**Office européen des brevets**

(11) Publication number : **0 506 858 B1**

(12) # EUROPEAN PATENT SPECIFICATION

(45) Date of publication of patent specification :
01.09.93 Bulletin 93/35

(51) Int. Cl.⁵ : **B01D 71/36,** B01D 69/12,
A41D 13/00, A62B 23/02

(21) Application number : **91902588.2**

(22) Date of filing : **12.12.90**

(86) International application number :
**PCT/US90/07429**

(87) International publication number :
**WO 91/08829 27.06.91 Gazette 91/14**

(54) **NEW FILTER MEDIA FOR USE IN SURGICAL AND CLEAN ROOM MASKS.**

(30) Priority : **18.12.89 US 452531**

(43) Date of publication of application :
**07.10.92 Bulletin 92/41**

(45) Publication of the grant of the patent :
**01.09.93 Bulletin 93/35**

(84) Designated Contracting States :
**DE FR GB IT SE**

(56) References cited :
**EP-A- 0 294 707**
**WO-A-81/03266**
**WO-A-89/04253**
**US-A- 3 802 429**

(73) Proprietor : **W.L. GORE & ASSOCIATES**
**551 Paper Mill Road P.O. Box 9206**
**Newark, DE 19714 (US)**

(72) Inventor : **BENSON, Hudson, M., III**
**801 Earl Road**
**Havre de Grace, MD 21078 (US)**
Inventor : **SIEGFRIED, Carole, A.**
**129 Goodneck Court**
**Elkton, MD 21921 (US)**

(74) Representative : **McCallum, William Potter et al**
**Cruikshank & Fairweather 19 Royal Exchange**
**Square**
**Glasgow G1 3AE Scotland (GB)**

## Description

## FIELD OF THE INVENTION

The present invention relates to new filter media for surgical masks and clean room masks. The new filter media utilizes free-standing microporous expanded polytetrafluoroethylene filter membranes joined only at the mask perimeter to protective nonwoven fabrics or to laminates of nonwoven fabric and highly permeable expanded polytetrafluoroethylene laminates. The filter media is constructed to have high filtration efficiency and low resistance to air flow. Those containing said laminates also reduce lint generation.

## BACKGROUND OF THE INVENTION

Historically, respirators and face masks were worn to protect the wearer from inhalation of toxic or nuisance dusts, fumes or bacteria. Surgical masks were intended to protect both the patient from contamination by operating room staff and visa versa. With the growth of clean room operations in the semi-conductor and computer industries and in industries concerned with objects for use in aerospace,and even more the appearance of Acquired Immune Deficiency Syndrome (AIDS), the emphasis on face mask efficiency has intensified. In the former, the demand is to protect the ever finer and finer engravings of semi-conductor chips, and of virtually all instrument surfaces going into aerospace from contamination. In turn, in the medical/surgical community, the emphasis is to protect the medical staff from exposure to body fluids of patients who might have AIDS or hepatitis. In both cases, however, the need is for comfortable masks with more efficient filtration. For use in clean rooms, there is an additional requirement that masks do not generate lint. In both cases, it is desirable that the masks be disposable on grounds of health and cost.

As clean rooms have become more refined, Class 1000 clean rooms are being supplanted by Class 100 clean rooms and Class 10 clean rooms. Class 1 clean rooms are in use. As the Class number decreases, the size of the largest particle allowed decreases as does the allowable total count. In the semi-conductor industry the degree of cleanliness is directly relatable to the yield of acceptable product.

As one would expect, ultraclean facilities have been engineered and designed with air filters and air changes and laminar flow hoods and materials of construction to provide such low particulate counts. However, there is still need for human operators to be within these areas,and there is good evidence that the human bodies are a major source of particulate contamination. Hair, skin particles, lint from clothing, and release of occluded dirt from clothing have all been major contributors. These, for the most part, are being well controlled with new generations of protective clothing, which includes lintless suits, head gear, boots and how covers. An area which still is a problem is the contamination from expired air.

Expired air contamination can occur with coughing or sneezing and also from residuals in the mouth and trachea of smokers. The breath of smokers contain 30 to about 500 times the particles of 0.2 to 0.4 microns of non-smokers, even 10 minutes after smoking. Nonsmokers consistently expire fewer particulates. (Hoenig and Daniels, J. of Environmental Sciences, 48-52, March/april 1984).

Further, masks for use in clean rooms must not be lint generators which is a major fault with many currently available masks.

In addition, clean room operators wear masks for their whole shift, and improvement in comfort over available masks is highly desirable.

In the medical/surgical use of masks, high efficiency in the filtration of bacteria as well as aerosols are needed for safety, and low resistance to the passage of air is needed for breathing comfort.

Low resistance to passage of air can be measured by military specification MIL-M-36954C, test method 4.4.1.2. The resistance is measured by a value called "Delta P". "Delta P" is the differential pressure induced across a filter media when a volume of air is passed through a designated area of a filter. Delta P is measured in the test procedure in terms of millimeters of a column of water that is formed in repsonse to the pressure of the air flow passing through the filter.

Since Delta P values measure the air flow passing through a filter, it can be correlated with the comfort that is experienced in inhaling and exhaling through a face mask made of the filter media involved. The higher the Delta P value, the more discomfort the wearer of a face mask experiences.

It is important for breathing comfort for the Delta P value to be low. On the other hand, increased filtration efficiency occurs as the pores of the filter become smaller but the Delta values tend to rise.

It is to addressing these problems that the present invention is directed.

2

## BRIEF DESCRIPTION OF THE INVENTION

The present invention utilizes microporous permeable filter membranes, preferably microporous expanded polytetrafluoroethylene membranes, in combination with a) protective fabrics or b) protective laminates of highly permeable microporous expanded polytetrafluoroethylene with fabrics, in face masks to provide highly efficient filter media with low resistance to air flow, i.e. low Delta P values, and to provide improved breathing comfort. High air flow at low Delta P values with high filtration efficiency is achieved by the choice of membranes in the several constructions and by choosing methods of joining the protective layers to the filter membrane which do not significantly increase Dalta P values. The preferred method of joining layers of protective fabrics or laminates with the filter membrane is to bond them together only at the perimeter of filter mask size samples, and not by conventional laminating techniques. This results in a "free-standing" filter membrane with a minimum of increase in the Delta P across the structure. Where laminates of nonwoven fabrics and highly permeable microporous expanded polytetrafluoroethylene membrane are used to protect the filter membrane, the highly permeable porous expanded polytetrafluoroethylene portion of the laminate is selected from a PTFE that is so permeable that such constructions still meet the requirements for comfortable wear when used in surgical masks. By having the highly permeable porous expanded polytetrafluoroethylene faces exposed on both sides of the composite, and with the free-standing microporous expanded polytetrafluoroethylene membrane used for filtration internal to both laminates and, highly efficient composites with low Delta P values which do not generate lint are provided which are suited for use in clean rooms.

## BRIEF DESCRIPTION OF THE DRAWINGS

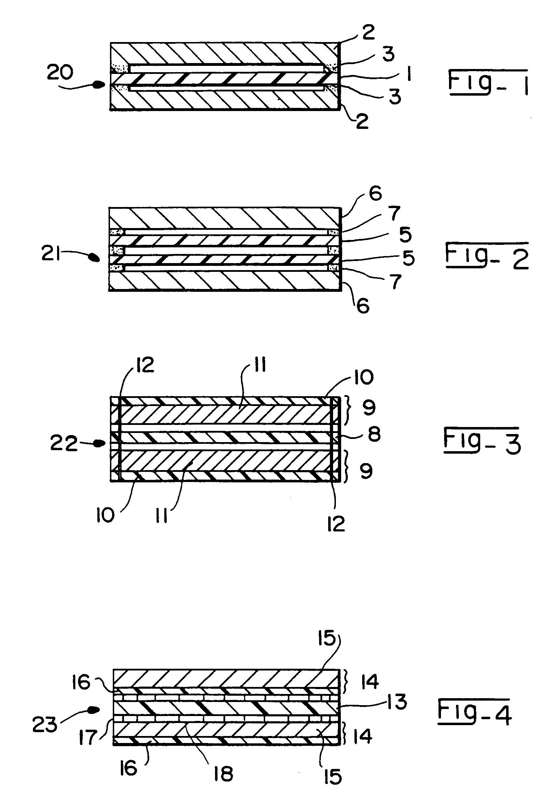

Figure 1 is a cross-sectional view of one embodiment of the invention. A layered composite (20) is made of a free-standing microporous expanded polytetrafluoroethylene filter membrane (1) attached to two layers of fabric (2) by sewing, welding, adhesive or melt bonding (3) around the perimeter of the filter media.

Figure 2 is a second embodiment of the present invention wherein two free-standing microporous expanded polytetrafluoroethylene filter membranes (5) are melt bonded at perimeter (7) to two outer layers of fabric (6) to form composite (21).

Figure 3 is another embodiment of the present invention wherein a free-standing microporous expanded polytetrafluoroethylene filter membrane (8) is joined to two laminate layers (9) consisting of very highly permeable porous expanded PTFE membrane (10) and nonwoven fabric (11) with the fabric faces toward the membrane (8). The layered composite (22) is joined at the periphery by a sewn seam (12).

Figure 4 is a cross-sectional representation of another embodiment of the present invention wherein microporous expanded polytetrafluoroethylene filter membrane (13) is joined to two laminates (14) consisting of nonwoven fabric (15) and very highly permeable expanded polytetrafluoroethylene membrane (16), but with one fabric face of the laminate adjacent to the core membrane (13) and the microporous expanded polytetrafluoroethylene layer of the second laminate adjacent to the other side of the core membrane (13). The layers are joined together at the periphery (17) and at points (18) by sewing, welding, adhesive or melt bonding to form composite (23).

## DETAILED DESCRIPTION OF THE INVENTION

The trade off of comfort or Delta P is efficiency of the filter media for removing particles, and this trade off is largely concerned with efficiency of removing particles or aerosols or bacteria whose size is in the sub-micron range. In the novel filter media of the present invention, the degree of trade off can be varied as desired, i.e., the efficiency and the comfort can be varied as desired.

for evaluation as surgical masks, the standard as defined by military specification MIL-M-36954C is the removal of a minimum of 95% of the challenging bacteria, or a Bacterial Filtration Efficiency (BFE) of not less than 95% as determined by test method 4.4.1.1.1 in said specification. In addition to removal of particulates, the mask should also repel liquid such as splashed blood or other body fluids.

No such well defined specification exists for clean room mask filter media, but it is clear that sub-micron particulate contamination as well as larger particle contamination are of concern. For Judging the efficiency of the filter media for clean room operations, challenge with a sub-micron sodium chloride aerosol was used and filter efficiencies for those ranges of particle size were examined. In addition, tests for the generation of lint (Helmke drum test) were performed to demonstrate which composite structures were lowest in lint generation.

The process of development of filter media for use in masks began by choosing microporous expanded polytetrafluoroethylene membranes as the filter membrane with Delta P values between 1.34 mm of water and 3.32 mm of water which are manufactured by W. L. Gore and Associates, Elkton, MD. The efficiencies for bacterial filtration efficiency of said membranes themselves is high, usually well over 90%. However, use of microporous expanded polytetrafluoroethylene membrane alone is not practical, both because of the chance of damage to the very thin membranes and the lack of bulk in the membranes which make them difficult to handle. Therefore, protection of the membrane and provision of a supporting structure is required and these must be provided in a manner that does not significantly increase the Delta P.

Use of continuous filament polypropylene, polyester or polyamide nonwoven fabrics with open structures has proven to be effective in protecting the microporous expanded polytetrafluoroethylene filtration membrane without excessive increase in the Delta P. The preferred fabrics are continuous filament polypropylene nonwoven fabrics which weight 1.0 oz/square yard or 1.5 oz/square yard that are available from Hanes Convesting Company, Conovec, NC, and are known as "Elite 21 White" and "Elite 45 White", respectively. Use of hydrophobic fabrics such as those from polypropylene has the added advantages of repelling water, not getting wet and soggy during use and being thermoplastics which can be heat bonded or welding to the microporous expanded polytetrafluoroethylene filter membranes.

To meet the low Delta P requirements in the composites i.e., less than about 5 or 6 mm of water or preferably less than 4, it is necessary to avoid classic bonded lamination techniques for combining the filter membrane with the outer fabric layers. Use of conventional heat bonding or adhesive bonding results in higher Delta P values. For instance, a filter membrane with a Delta P of 1.9 mm of water continuously heat bonded to a nonwoven polypropylene fabric with a Delta P of 0.18 mm of water resulted in a laminate with a Delta P of 3.3 mm of water. Combination of the same microporous expanded polytetrafluoroethylene filtration membrane with two layers of the same nonwoven fabric by sewing or heat bonding along the perimeter of a 4 inch x 7 inch mask size example, on the other hand, resulted in a Delta P of 2.4 mm of water, only slightly higher than the theoretical Delta P derived from adding the Delta P's for the components together. Thus, the inventive feature of this invention is the free-standing configuration of filter membrane combined with protecting fabrics and laminates only at the perimeter of mask sized example. It is this construction that results in the unusual degree of comfort combined with good filtration efficiency of the filter media of this invention.

Such combinations of free-standing filter membrane joined to either continuous filament nonwoven fabric or laminates of said fabric with highly permeable expanded polytetrafluoroethylene can be joined at the perimeter of mask sized samples by sewing, heat bonding, adhesive bonding or welding. Composites made in this manner are sturdy enough to support the attachment of elastic bands or ties for holding the masks in place. The preferred technique for joining said composites together is heat bonding, or using the thermoplastic properties of the nonwoven fabric to provide the required bond.

To provide non-linting properties for clean room masks, bonded laminates of the continuous filament nonwoven fabrics with highly permeable expanded polytetrafluoroethylene membranes were used. Such membranes themselves have Delta P values in the order of .45 to 0.7 in. of water and laminates with the "Elite 45 White" nonwoven polypropylene have Delta P values of 1.5 inches of water or less. Although these laminates provide a small amount of filtration efficiency, their prime use is to prevent lint generation.

Low lint generating filter composites are constructed of a layer of said laminates with the highly permeable expanded polytetrafluoroethylene portion of the laminate facing outward and the inward polypropylene fabric face of the laminate in juxta-position to one face of the free-standing microporous expanded polytetrafluoroethylene filter membrane. Against the second face of said filter membrane, a second like laminate is placed again with the polypropylene face of the laminate in juxta-position with said filter membrane and the highly permeable expanded polytetrafluoroethylene portion of the laminate facing out.

As with composites for surgical mask use, the layers of these mask sized samples of these composites for clean room use are also joined together at the edges by heat bonding or welding along the perimeters of the sample.

Filter media for surgical and clean room use were constructed using the above principles and tested for Bacterial Filtration Efficiency and Delta P. The results are shown in Table I.

## TABLE 1

### BACTERIAL FILTRATION EFFICIENCY AND DELTA P

### FOR VARIOUS FILTRATION MEDIA

| SAMPLE | COMPOSITE STRUCTURE [a] | CONSTRUCTION | BACTERIA FILTRATION EFFICIENCIES, % (b) | DELTA P, [b] mm. WATER PRESSURE |
|---|---|---|---|---|
| A. | 1/2/1 | Heat bonded on edges only | 99.98 | 1.85 |
| B. | 1/2/3 | " | 99.95 | 3.0 |
| C. | 1/4/1 | " | 99.95 | 2.24 |
| D. | 1/4/3 | " | 99.99 | 2.98 |
| E. | 3/2/3 | " | 99.99 | 3.56 |

a. List of materials
1. 1.0 oz. continuous filament polypropylene nonwoven fabric.
2. Microporous expanded PTFE membrane, 1.51 mm water Delta P.
3. Laminate of 1.5 oz. continuous filament polypropylene nonwoven fabric and microporous expanded polytetrafluoroethylene membrane 0.74 mm water delta P, membrane face out.
4. Microporous expanded polytetrafluoroethylene 1.90 mm water resistance to flow.

b. Bacterial Filtration Efficiency and Delta P were performed according to MIL-M-36954C.

c. Viral Filtration Efficiency was performed according to a modification of b.

All samples tested easily pass the Bacteria Filtration Efficiency specification of 95% or greater as established in the military specification (ibid) and the Delta P values were all below 4 mm. water.

The samples were then challenged with sodium chloride aerosols. These test results are shown in Table II.

The filtration efficiency can be adjusted by selecting microporous expanded polytetrafluoroethylene filtration membranes with different permeabilities, and to a lesser extent choice of the outer protective fabric as is demonstrated in the results in Table II.

The samples were tested for lint generation by the Helmke Drum Test. The results are shown in Table III.

**TABLE II**

**SODIUM CHLORIDE AEROSOL FILTRATION EFFICIENCY, %**

| Sample | Construction (a) | Particle Size, Microns (b) 0.10-0.12 | 0.25-0.35 | 0.45-0.60 |
|--------|------------------|----------|-----------|-----------|
| A | 1/2/1 | 71.3 | 82.2 | 92.7 |
| B | 1/2/3 | 72.9 | 92.7 | 97.8 |
| C | 1/4/1 | 80.0 | 87.5 | 96.3 |
| D | 1/4/3 | 85.8 | 94.5 | 99.0 |
| E | 3/2/3 | 84.9 | 95.3 | 99.3 |

a.  List of materials
   1.  1.0 oz. continuous filament polypropylene nonwoven fabric.
   2.  Microporous expanded PTFE membrane, 1.51 mm water Delta P.
   3.  Laminate of 1.5 oz. continuous filament polypropylene nonwoven fabric and microporous expanded polytetrafluoroethylene membrane 0.74 mm water Delta P, membrane face out.
   4.  Microporous expanded polytetrafluoroethylene 1.90 mm water Delta P.

b.  Sodium Chloride Aerosol Filtration Efficiency as described in Experimental Section.

TABLE III

HELMKE DRUM TEST FOR LINT GENERATION (a)

| Sample | Construction (a) | Particles 0.3 microns/minute |
|---|---|---|
| A | 1/2/1 | 127 |
| B | 1/2/3 | 97.9 |
| C | 1/4/1 | 213.7 |
| D | 1/4/3 | 94.7 |
| E | 3/2/3 | 42.3 |

a. List of materials
1. 1.0 oz. continuous filament polypropylene nonwoven fabric.
2. Microporous expanded PTFE membrane, 1.51 mm water Delta P.
3. Laminate of 1.5 oz. continuous filament polypropylene nonwoven fabric and microporous expanded polytetrafluoroethylene membrane 0.74 mm water Delta P, membrane face out.
4. Microporous expanded polytetrafluoroethylene 1.90 mm water Delta P.

As demonstrated in Table III, providing outer surface layers of highly permeable porous expanded polytetrafluoroethylene, as used in Sample E, effectively reduced the lint generation by 67% from a comparable composite (A) which does not have the protection of said highly porous membrane.

### Aerosol Filtration of Bacterial

The efficiency of the filtration media was tested as described in Military Specification MIL-M-36954C section 4.4.1.1.1 Method I. The procedure is included herein by reference.

### Aerosol Filtration of Virus

The challenge study is performed as the filtration of bacteria above, except the agar plates contain host bacteria for the specific challenge virus. The viruses most commonly used are T7 or Phi-X-174.

### Delta P

The air resistance to flow, Delta P was tested as described in Military Specification MIL-M-36954C, section 4.4.1.2

4.4.1.2 Air exchange pressure. A device which measures the pressure differential required to draw air through a measured surface area at a constant air flow rate is used to measure the air exchange pressure of various materials. Water filled manometers, ($m_1$, and $m_2$) are used to measure the pressure differential. A Roger Gilmont Instrument (R.G.I.) flowmeter or a flowmeter of comparable precision is used for measurement of the air flow. An electric vacuum pump draws air through the apparatus and a needle valve is used to adjust the flow rate. The test material is placed across the 2.5 cm diameter orifice and clamped into place so that the test material will be in line and across the flow of air. The pump is started and the flow of air adjusted to 8 liters per minute. Manometers $m_1$ + $m_2$ are read and recorded. This procedure is carried out on five different areas of the mask and the readings averaged. The air exchange pressure is calculated as follows:

$$\text{Delta P} = \frac{\overline{X}_{m2} - \overline{X}_{m1}}{4.9}$$

Where: $\overline{X}m_1$ = mm. water pressure, Manometer No. 1 average of 5 test areas, low pressure side of test material.
$\overline{X}m_2$ = mm. water pressure, Manometer No. 2-average of 5 test areas, high pressure side of test material.
4.9 = cm² area of test material.
Delta P = Pressure differential per cm² of test material expressed as mm of water.

### Helmke Drum Test for Lint Generation

The Helmke Drum Test to determine the level of detachable particles 0.3 micron or larger is described in the Institute of Environmental Sciences Recommended Practice (IES-RP-CC-003-87-T, October 1989) is included here by reference.

### Sodium Chloride Aerosol Filtration Efficiency

Sodium chloride aerosol filtration efficiency is measured on an instrument which the filter media is clamped and sealed as such apparatus and an air velocity thru the sample is established at 3.2 m./min. A well mixed, sodium chloride aerosol in an air stream with said velocity is directed through a sample of air filter media. A small sample is taken of the challenge air stream and the penetrating air stream. The samples are channelled through to dual laser particle counters which give an accurate count of the sodium chloride particles in each air stream. A penetration value is merely the ratio of the counts of particles within a narrow range particle size in the penetration air stream compared to the counts of particles within said particle size range in the challenge air stream. The percent efficiency value is 100 - (100 x penetration).

## Claims

1. Filter media for use in surgical and clean room masks comprising a composite of one or more layers of free-standing microporous filter membrane combined with:
   a. a protective nonwoven fabric, or
   b. a protective bonded laminate of nonwoven fabric and highly permeable expanded polytetrafluoroethylene membrane:
      in either case the fabric or fabric face of the laminate being in juxta-position with both faces of the filter membrane;
      said composite having a Bacterial Filtration Efficiency greater than 95%;
      said filter membrane attached to a) or b) only around the periphery of the filter media.

2. Filter media of Claim 1 wherein the composite has a Delta P of 5 mm or less.

3. Filter media of Claim 1 wherein the composite has a Delta P of 4 mm or less.

4. Filter media of Claim 1 wherein the filter membrane is microporous expanded polytetrafluoroethylene with a Delta P value between 1.34 mm water and 3.32 mm water.

5. Filter media of Claim 1 wherein the fabric is continuous filament nonwoven polyamide, polyester or polyolefin.

6. Filter media of Claim 1 wherein the fabric is continuous filament nonwoven polypropylene.

7. Filter media of Claim 1, wherein the protective laminates are composed of continuous filament nonwoven polypropylene fabric joined to highly permeable expanded polytetrafluoroethylene membrane, and the total composite consists of two layers of said protective laminate joined to a free-standing microporous expanded polytetrafluoroethylene filter membrane in a manner that both fabric faces of said laminates are in juxta-position on either side of said filter membrane.

8. Filter media of Claim 5 wherein said filter media generates less than 35% the amount of lint generated by similar composites made with two layers of continuous filament nonwoven protection fabric joined on either side of the microporous expanded polytetrafluoroethylene filter membrane.

**9.** Filter media of Claim 8 wherein the perimeters are joined by sewing.

**10.** Filter media of Claim 8 wherein the perimeters are joined with adhesive.

**11.** Filter media of Claim 8 wherein the perimeters are joined by heat bonding or welding.


## Patentansprüche

**1.** Filtermedien zur Verwendung in chirurgischen und Reinraummasken aufweisend ein Komposit aus einer oder mehreren Schichten freistehender, mikroporöser Filtermembran, verbunden mit:
a. einem schützenden nicht gewebten Gefüge, oder
b. einem schützenden, gebundenen Laminat aus nicht gewebten Gefüge und hochdurchlässiger, expandierter Polytetrafluorethylenmembran:
wobei in beiden Fällen das Gefüge oder die Gefügeoberfläche des Laminats in Nebeneinander-Stellung mit beiden Oberflächen der Filtermembran ist;
das Komposit eine Bakterienfiltrationseffizienz von größer als 95 % hat;
die Filtermembran nur am Umfang der Filtermedien an a. oder b. befestigt ist.

**2.** Filtermedien nach Anspruch 1, bei denen das Komposit ein Delta p von 5 mm oder weniger hat.

**3.** Filtermedien nach Anspruch 1, bei denen das Komposit ein Delta p von 4 mm oder weniger hat.

**4.** Filtermedien nach Anspruch 1, bei denen die Filtermembran mikroporöses, expandiertes Polytetrafluorethylen mit einem Delta p-Wert zwischen 1,34 mm Wasser und 3,32 mm Wasser ist.

**5.** Filtermedien nach Anspruch 1, bei denen das Gefüge fortlaufendfädiges, nicht gewebtes Polyamid, Polyester oder Polyolefin ist.

**6.** Filtermedien nach Anspruch 1, bei denen das Gefüge fortlaufendfädiges, nicht gewebtes Polypropylen ist.

**7.** Filtermedien nach Anspruch 1, bei denen die schützenden Laminate zusammengesetzt sind aus mit hochdurchlässiger, expandierter Polytetrafluorethylenmembran verbundenem fortlaufendfädigem, nicht gewebtem Polypropylengefüge, und bei dem das Gesamtkomposit besteht aus zwei Schichten des schützenden Laminats, die so mit einer freistehenden, mikroporösen, expandierten Polytetrafluorethylen-Filtermembran verbunden sind, daß beide Gefügeoberflächen der Laminate in Nebeneinander-Stellung auf beiden Seiten der Filtermembran sind.

**8.** Filtermedien nach Anspruch 5, bei denen die Filtermedien weniger als 35 % der Menge an Fusseln erzeugen, die von ähnlichen Zusammensetzungen erzeugt werden, die hergestellt sind aus zwei Schichten von fortlaufendfädigem, nicht gewebtem Schutzgefüge, die mit beiden Seiten der mikroporösen, expandierten Polytetrafluorethylen-Filtermembran verbunden sind.

**9.** Filtermedien nach Anspruch 8, bei denen die Ränder durch Nähen verbunden sind.

**10.** Filtermedien nach Anspruch 8, bei denen die Ränder mit Klebstoff verbunden sind.

**11.** Filtermedien nach Anspruch 8, bei denen die Ränder durch Hitzebindung oder Schweißen verbunden sind.


## Revendications

**1.** Milieux filtrants utilisés dans des masques chirurgicaux et dans des masques de salles blanches, comprenant un composite composé d'une ou de plusieurs couches de membrane filtrante microporeuse autosupportante combinées à :
a. un tissu de protection non tissé, ou
b. un lamifié de protection lié fabriqué avec un tissu non tissé et une membrane hautement perméable de polytétrafluoroéthylène expansé ;

dans l'un ou l'autre cas, le tissu ou le côté tissu du lamifié étant juxtaposé contre les deux côtés de la membrane filtrante;

ledit composite ayant une Efficacité de Filtration des Bactéries supérieure à 95 % ; ladite membrane filtrante n'étant fixée sur a) ou sur b) qu'autour de la périphérie des milieux filtrants.

2. Les milieux filtrants selon la Revendication 1, dans lesquels la valeur Delta P du composite est inférieure ou égale à 5 mm.

3. Les milieux filtrants selon la Revendication 1, dans lesquels la valeur Delta P du composite est inférieure ou égale à 4 mm.

4. Les milieux filtrants selon la Revendication 1, dans lesquels la membrane filtrante est en polytétrafluoroéthylène expansé microporeux et a une valeur Delta P comprise entre 1,34 mm d'eau et 3,32 mm d'eau.

5. Les milieux filtrants selon la Revendication 1, dans lesquels le tissu est du polyamide, du polyester ou de la polyoléfine non tissée à filaments continus.

6. Les milieux filtrants selon la Revendication 1, dans lesquels le tissu est du polypropylène non tissé à filaments continus.

7. Les milieux filtrants selon la Revendication 1, dans lesquels les lamifiés de protection sont composés de tissu de polypropylène non tissé à filaments continus uni à une membrane hautement perméable de polytétrafluoroéthylène expansé, et dans lesquels l'ensemble du composite est composé de deux couches dudit lamifié de protection uni à une membrane filtrante microporeuse autosupportante de polytétrafluoroéthylène expansé de telle sorte que les deux côtés tissu desdits lamifiés soient juxtaposés contre n'importe quel côté de ladite membrane.

8. Les milieux filtrants selon la Revendication 5, dans lesquels lesdits milieux filtrants génèrent moins de 35% de la quantité de peluche générée par des composites similaires fabriqués avec deux couches de tissu de protection non tissé à filaments continus unies d'un côté ou de l'autre de la membrane filtrante microporeuse en polytétrafluoroéthylène expansé.

9. Les milieux filtrants selon la Revendication 8, dans lesquels les périmètres sont unis par couture.

10. Les milieux filtrants selon la Revendication 8, dans lesquels les périmètres sont unis avec de l'adhésif.

11. Les milieux filtrants selon la Revendication 8, dans lesquels les périmètres sont unis par thermo-liaison ou soudage.

Fig-1

Fig-2

Fig-3

Fig-4